# EUROPEAN PATENT APPLICATION

(11) **EP 3 654 080 A1**
(43) Date of publication of application: **20.05.2020**
(21) Application number: 19205719.8
(22) Date of filing: 28.10.2019
(51) Int. Cl.: G02B 6/44

(54) **OPTICAL FIBER BACKBONE CABLE HAVING FIRE RETARDANT SEPARATOR**

(30) Priority: 13.11.2018 US 201816188823
(71) Applicant: Ofs Fitel Llc, A Delaware Limited Liability Company, Norcross, GA 30071 (US)
(72) Inventor: Scarpaci, Annabelle, Austell, GA 30168 (US); Toland, Henson P., Atlanta, GA 30307 (US); Weimann, Peter A., Atlanta, GA 30306 (US)
(74) Representative: Stöckeler, Ferdinand

(57) **Abstract**

An optical fiber cable (100) includes a cable jacket (102), a multiple-channel separator (110) within the cable jacket (102), a plurality of fiber sub-units (104,106,108) within the cable jacket (102), and one or more strength members (111). The separator (110) is made of a fire retardant material devoid of any embedded strength members. Each fiber sub-units (04,106,108) may include multiple optical fibers (112) and extend within a respective separator channel (114,116,118). The one or more strength members (111) are configured to provide tensile strength to the optical fiber cable (100).

## Description

### BACKGROUND

An optical fiber distribution cable generally comprises two or more optical fibers and strength members enclosed within a jacket. An optical fiber backbone cable is a type of optical fiber cable designed for long horizontal runs in overhead ladder racks, underfloor trays or vertical risers in service provider central office and data center facilities. Being an indoor cable installed permanently in non-easily-accessible locations, an optical fiber backbone cable has to meet fire safety requirements, such as Riser or Plenum for applications in the North American region or Euroclass Dca, Cca or B2ca CPR (Construction Products Regulation) for applications in the European Union. Countries in other regions of the world often use CPR to define their own requirements. Mechanical characteristics of an optical fiber backbone cable are high tensile strength to withstand the pull tension of the installation process, and high stiffness to provide crush and kink resistance and to protect the relatively fragile glass optical fibers. To provide tensile strength, aramid or fiberglass reinforcing yarn may be included in the cable in the form of a reinforcing layer between the fibers and the jacket. To provide crush and kink resistance, an acrylate matrix layer may be provided between the fibers and the aramid yarn layer. However, acrylic is a very flammable material, making it challenging for the cable to meet high fire rated standards requirements.

Common North American industry standards, such as Telcordia GR-409 or ICEA-S-596, require that optical fiber backbone cables be designed to meet standard crush resistance requirement of 100 Newtons per centimeter (N/cm). Since backbone cables are often used to distribute optical signals from one section of a building to another, they generally have relatively high fiber counts, such as 12, 24, 48, or more fibers. The fibers in a compact backbone cable may be organized into 12 fiber subunits by applying a sub-jacket or by loosely wrapping groups of fibers in threads or yarns for ease of identification. Organizing the fibers in subunits of 12 is often convenient for end users who connectorize or install cables, as fiber optic networks are often organized in circuits of 12. Other subunit sizes, such as 8, 16, or 24 fibers, may be used based on the end user's system architecture.

Meeting crush resistance requirements for some fiber counts in compact cables with subunits can be difficult because of the unstable geometric arrangement of the subunits. For example, a 48 fiber compact round cable organized as four subunits of 12 fibers each, may have difficulty meeting crush requirement because of the tetragonal arrangement of the subunits. Cables having 24, 36, 72 and 96 fibers arranged in groups of 2, 3, 6 and 8 subunits, respectively, may have the same issue.

A structure commonly referred to as a separator in metallic cables and a slotted core in optical fiber cables has been employed in certain applications. A separator in a metallic cable is an insulator that prevents crosstalk between twisted pairs of conductors. A slotted-core structure may be employed to organize optical fibers or ribbons in a cable. The slotted core structure also provides tensile strength to the cable through a strength member embedded in the center of the core. The strength member is commonly composed of a very high modulus material, such as a solid steel wire, braided steel wires, or fiberglass-epoxy composite rod. These structures provide tensile and compressive rigidity to the overall cable.

Providing compact, i.e. small diameter, optical fiber cables with fiber counts between, for example, 24 and 96 fibers, which meet fire safety and high crush resistance requirements presents challenges, which may be addressed by the present invention in the manner described below.

### SUMMARY

Embodiments of the invention relate to optical fiber cables having fire retardant separators in the center of the cable. In an exemplary embodiment, an optical fiber cable may include a cable jacket, a separator within the cable jacket, a plurality of fiber subunits within the cable jacket, and one or more strength members within the cable jacket. The separator may be made of a fire retardant material and have a plurality of channels. The separator may be devoid of any embedded strength members. Each fiber subunit may comprise a plurality of optical fibers and extend within a respective one of the channels. Each fiber subunit is thus separated from an adjacent fiber subunit by a channel wall. The one or more strength members may be configured to provide tensile strength to the optical fiber cable.

Other cables, methods, features, and advantages will be or become apparent to one of skill in the art upon examination of the following figures and detailed description. It is intended that all such additional systems, methods, features, and advantages be included within this description, be within the scope of the specification, and be protected by the accompanying claims.

### BRIEF DESCRIPTION OF THE DRAWINGS

The invention can be better understood with reference to the following drawings. The components in the drawings are not necessarily to scale, emphasis instead being placed upon clearly illustrating the principles of the present invention.
FIG. 1A is cross-sectional view of an optical fiber backbone cable having a fire retardant separator, in accordance with exemplary embodiments of the invention.
FIG. 1B is a cross-sectional view of the fire retardant separator of FIG. 1A.
FIG. 2A is cross-sectional view of another optical fiber backbone cable having a fire retardant separator, in accordance with exemplary embodiments of the invention.
FIG. 2B is a cross-sectional view of the fire retardant separator of FIG. 2A.
FIG. 3A is cross-sectional view of still another optical fiber backbone cable having a fire retardant separator, in accordance with exemplary embodiments of the invention.
FIG. 3B is a cross-sectional view of the fire retardant separator of FIG. 3A.
FIG. 4A is cross-sectional view of yet another optical fiber backbone cable having a fire retardant separator, in accordance with exemplary embodiments of the invention.
FIG. 4B is a cross-sectional view of the fire retardant separator of FIG. 4A.
FIG. 5A is cross-sectional view of a further optical fiber backbone cable having a fire retardant separator, in accordance with exemplary embodiments of the invention.
FIG. 5B is a cross-sectional view of the fire retardant separator of FIG. 5A.
FIG. 6A is cross-sectional view of yet a further optical fiber backbone cable having a fire retardant separator, in accordance with exemplary embodiments of the invention.
FIG. 6B is a cross-sectional view of the fire retardant separator of FIG. 6A.
FIG. 7 is cross-sectional view of still a further optical fiber backbone cable having a fire retardant separator and sub-units, in accordance with exemplary embodiments of the invention.
FIG. 8 is a top plan view of a portion of rollable optical fiber ribbon.

### DETAILED DESCRIPTION

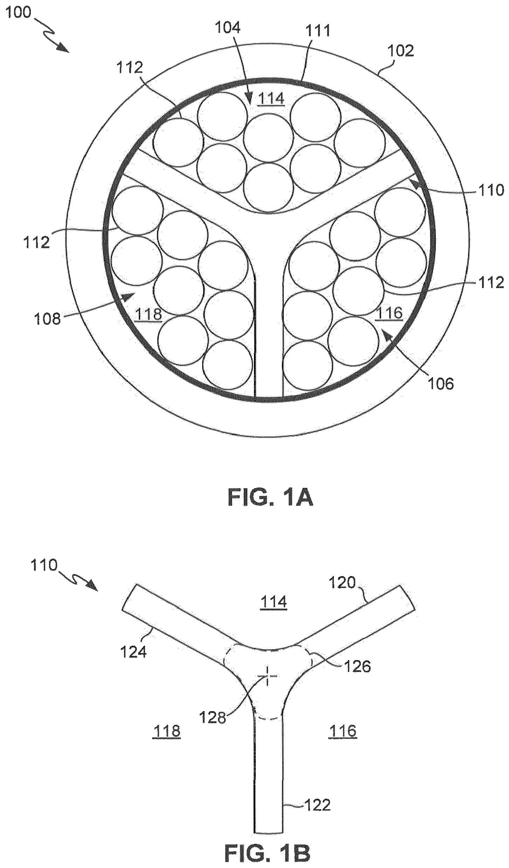

As illustrated in FIG. 1A (not to scale), in an illustrative or exemplary embodiment of the invention, an optical fiber cable 100 includes a cable jacket 102, three fiber subunits 104, 106, and 108, a separator 110, and one or more strength members 111. Separator 110 is made of a fire retardant material. As described below, separator 110 provides cable 100 with not only fire retardance but also crush resistance and compactness required for indoor or indoor/outdoor applications.

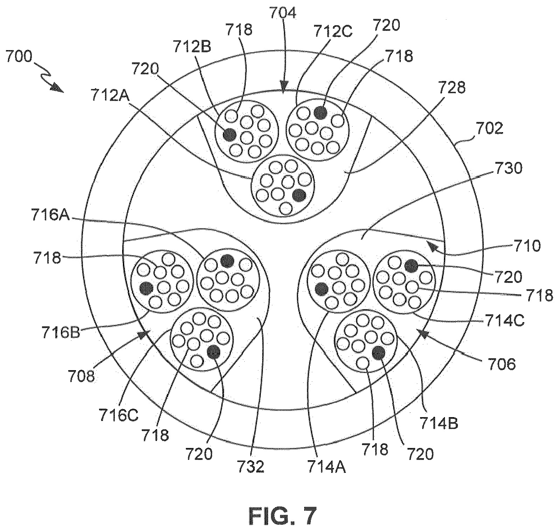

Unlike prior slotted cores, no rigid reinforcement, such as a solid steel wire, braided steel wires, fiberglass-epoxy composite rod, or other high tensile modulus strength member, is embedded in separator 110. As described in further detail below, separator 110 may consist entirely of a fire-retardant material having a tensile modulus in the range of 400-2400 megapascal (Mpa). Optical fiber cable 100 and other cables described below are configured to be as small as possible, flexible, and suitable for use in compact indoor spaces. Placing a rigid reinforcement in the center would make the cables stiffer and harder to bend, requiring a larger cable bend radius and making the cables harder to handle in a congested indoor environment. Instead, as described in further detail below, tensile stiffness is supplied through deployment of reinforcing yarn (typically para-aramid, e.g. Kevlar®) placed either between the core and the cable jacket in embodiments having subunits comprising loose fibers or rollable ribbons (FIGs. 1A-6B) or in each subunit in embodiments having cordage type subunits (FIG. 7). In embodiments having subunits comprising loose fibers or rollable ribbons, the reinforcing yarn also plays the role of binder to hold the loose fibers or rollable ribbons in place. In embodiments having cordage type subunits, additional binders may be included.

Each of fiber subunits 104, 106, and 108 includes multiple optical fibers 112. Optical fibers 112 may have a standard size, such as an overall diameter of 250 µm. For symmetry, each of fiber subunits 104, 106, and 108 may have the same number of optical fibers 112. For example, each of the three fiber subunits 104, 106, and 108 may consist of eight optical fibers 112, thereby providing optical fiber cable 100 with a total of 24 optical fibers.

Separator 110 has three slots or channels 114, 116, and 118, and may extend the length of optical fiber cable 100. Separator 110 has three arms 120, 122, and 124 (FIG. 1B). Channel 114 is defined by the space between arms 120 and 124. Channel 116 is defined by the space between arms 120 and 122. Channel 118 is defined by the space between arms 122 and 124. Fiber subunits 104, 106, and 108 extend the length of optical fiber cable 100 within channels 114, 116, and 118, respectively.

As further shown in FIG. 1B, arms 120, 122, and 124 extend in a radially symmetrical arrangement from a central portion 126 (indicated generally in broken line) of separator 110 toward the interior surface of cable jacket 102. The central axis 128 (indicated in FIG. 1B by crosshairs) of central portion 126, from which arms 120, 122, and 124 radiate, is substantially aligned or coincident with the longitudinal axis (not separately labeled in FIG. 1A) of cable jacket 102.

The one or more strength members 111 may comprise, for example, one or more para-aramid yarns helically wound around separator 110 and fiber subunits 104-108. That is, the one or more strength members 111 are under cable jacket 102 and over separator 110 and fiber subunits 104-108. The one or more strength members 111 are configured to provide tensile strength to optical fiber cable 100. The tensile modulus of strength members 111 may be 80,000 MPa or more, which is one or more orders of magnitude greater than the tensile modulus (400-2400 MPa) of separator 110. The one or more strength members 111 (e.g., para-aramid yarns) may collectively provide a tensile rating of at least 1320 Newton (N) for optical fiber cable 100. Accordingly, strength members 111 provide essentially all of the tensile strength required for optical fiber cable 100 to meet installation load standards. The one or more strength members 111 are also configured to bind fiber subunits 104-108 with separator 110.

The ends of arms 120, 122 and 124, wrapped by strength members 111 (e.g., para-aramid yarns), are substantially in contact with the interior surface of cable jacket 102. The ends of arms 120, 122, and 124 may have curved surfaces that match the curvature of the interior surface of cable jacket 102 to provide a stable fit.

Each of arms 120, 122, and 124 has a distal portion with a generally rectangular cross sectional shape that adjoins or extends from central portion 126. A wall or interior surface of channel 114 is defined by flat surfaces or walls of arms 120 and 124 and a first concave surface of central portion 126 between arms 120 and 124. A wall or interior surface of channel 116 is defined by flat surfaces of arms 120 and 122 and a second concave surface of central portion 126 between arms 120 and 122. A wall or interior surface of channel 118 is defined by flat surfaces of arms 122 and 124 and a third concave surface of central portion 126 between arms 122 and 124. Each of channels 114, 116, and 118 is bounded (in cross section) by such a wall and a portion of strength members 111, providing each of channels 114, 116, and 118 with a generally sector-shaped cross section. Accordingly, arm 120 separates fiber subunit 104 from fiber subunit 106; arm 122 separates fiber subunit 106 from fiber subunit 108; and arm 124 separates fiber subunit 108 from fiber subunit 104. Also, as the central axes of arms 120, 122, and 124 are radially separated from each other by 120 degrees with respect to central axis 128, the centroids of fiber subunits 104, 106, and 108 are similarly radially separated from each other by 120 degrees.

The above-described structure not only provides optical fiber cable 100 with fire retardance but also resists crushing the relatively fragile optical fibers 112. Each of fiber subunits 104, 106, and 108 fits snugly within its respective channel 114, 116, and 118. That is, each of channels 114, 116, and 118 is substantially filled by optical fibers 112, with essentially no space for additional optical fibers 112. Accordingly, optical fiber cable 100 may have a 6.0 mm outer diameter with a packing density per channel in a range from about 1.0 to 8.0 fibers per square millimeter (mm²). The snug fit of fiber subunits 104, 106, and 108 within their respective channels 114, 116, and 118, in conjunction with the mechanical strength of separator 110 and radial symmetry of channels 114, 116, and 118, promotes crush resistance. Absent a separator, a cable having exactly three fiber subunits would have an unstable geometric arrangement within the jacket under compression (crush) test conditions. That is, if such a cable were subjected to a compression test, the original substantially symmetrical cross-sectional shapes of the three subunits would deform to various asymmetrical, flattened shapes, thereby increasing the likelihood of damaging the fibers. Separator 110 thus promotes a stable geometric arrangement of fibers in a cable in which the number (three in this example) of subunits would otherwise make the subunits geometrically unstable within the jacket in a compression test.

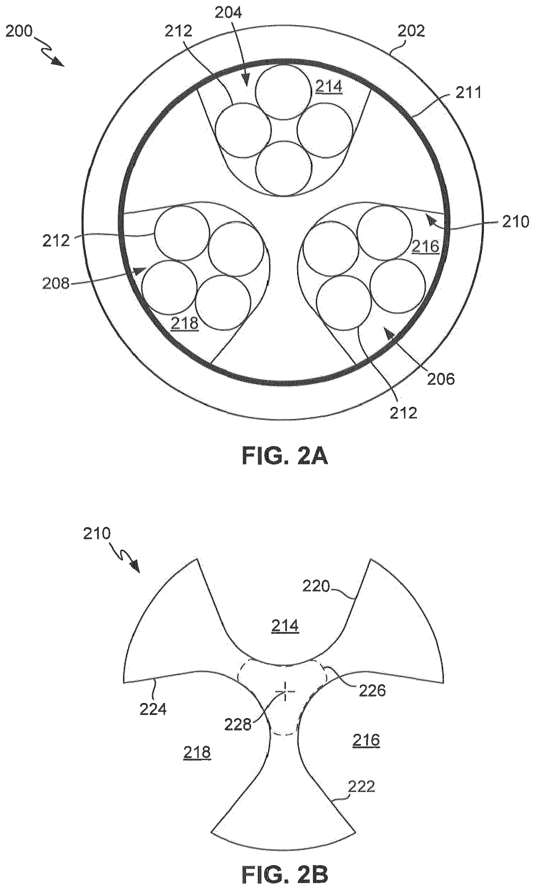

As illustrated in FIG. 2A (not to scale), in another illustrative or exemplary embodiment of the invention, an optical fiber cable 200 includes a cable jacket 202, three fiber subunits 204, 206, and 208, a separator 210, and one or more strength members 211. Separator 210 is made of a fire retardant material. As described below, separator 210 provides cable 200 with not only fire retardance but also crush resistance and compactness required for indoor or indoor/outdoor applications. Unlike prior slotted cores, no rigid reinforcement, such as a solid steel wire, braided steel wires, fiberglass-epoxy composite rod, or other high tensile modulus strength member, is embedded in separator 210. As described in further detail below, separator 110 may consist entirely of a fire-retardant material having a tensile modulus in the range of 400-2400 Mpa. Rather than having a core with an embedded, high-modulus strength member, strength members 211 provide cable 200 with tensile strength without sacrificing compactness and flexibility.

Each of fiber subunits 204, 206, and 208 includes multiple optical fibers 212. Optical fibers 212 may have a standard size, such as an overall diameter of 250 µm. For symmetry, each of fiber subunits 204, 206, and 208 may have the same number of optical fibers 212. For example, each of the three fiber subunits 204, 206, and 208 may consist of four optical fibers 212, thereby providing optical fiber cable 200 with a total of 12 optical fibers.

Separator 210 has three channels 214, 216, and 218 and may extend the length of optical fiber cable 200. Separator 210 has three arms 220, 222, and 224 (FIG. 2B). Channel 214 is defined by the space between arms 220 and 224. Channel 216 is defined by the space between arms 220 and 222. Channel 218 is defined by the space between arms 222 and 224. Fiber subunits 204, 206, and 208 extend the length of optical fiber cable 200 within channels 214, 216, and 218, respectively.

As further shown in FIG. 2B, arms 220, 222, and 224 extend in a radially symmetrical arrangement from a central portion 226 (indicated generally in broken line) of separator 210 toward the interior surface of cable jacket 202. The central axis 228 (indicated in FIG. 2B by crosshairs) of central portion 226, from which arms 220, 222, and 224 radiate, is aligned with the longitudinal axis (not separately labeled in FIG. 2A) of cable jacket 202.

The one or more strength members 211 may comprise, for example, one or more para-aramid yarns helically wound around separator 210 and fiber subunits 204-208. That is, the one or more strength members 211 are under cable jacket 202 and over separator 210 and fiber subunits 204-208. The one or more strength members 211 are configured to provide tensile strength to optical fiber cable 200. The tensile modulus of strength members 211 may be 80,000 MPa or more, which is one or more orders of magnitude greater than the tensile modulus (400-2400 MPa) of separator 210. The one or more strength members 211 (e.g., para-aramid yarns) may collectively provide a tensile rating of at least 1320 N for optical fiber cable 200. Accordingly, strength members 211 provide essentially all of the tensile strength required for optical fiber cable 200 to meet installation load standards. The one or more strength members 211 are also configured to bind fiber subunits 204-208 with separator 210.

The ends of arms 220, 222 and 224, wrapped by strength members 211 (e.g., para-aramid yarns), may be substantially in contact with the interior surface of cable jacket 202. The ends of arms 220, 222, and 224 may have curved surfaces that match the curvature of the interior surface of cable jacket 202 to provide a stable fit.

Each of arms 220, 222, and 224 has a distal portion with a generally sector-shaped cross section that adjoins or extends from central portion 226. That is, in this embodiment (FIGs. 2A-2B) the distal portion of each of arms 220, 222, and 224 is widest at the end that contacts the interior surface of cable jacket 202. A wall or interior surface of channel 214 is defined by flat or slightly concave surfaces or walls of arms 220 and 224 and a first concave surface of central portion 226 between arms 220 and 224. A wall or interior surface of channel 216 is defined by flat or slightly concave surfaces of arms 220 and 222 and a second concave surface of central portion 226 between arms 220 and 222. A wall or interior surface of channel 218 is defined by flat or slightly concave surfaces of arms 222 and 224 and a third concave surface of central portion 226 between arms 222 and 224. Each of channels 214, 216, and 218 is bounded (in cross section) by such a wall and a portion of strength members 211, providing each of channels 214, 216, and 218 with a generally sector-shaped cross section. Accordingly: arm 220 separates fiber subunit 204 from fiber subunit 206; arm 222 separates fiber subunit 206 from fiber subunit 208; and arm 224 separates fiber subunit 208 from fiber subunit 204. Also, as the central axes of arms 220, 222, and 224 are radially separated from each other by 120 degrees with respect to central axis 228, the centroids of fiber subunits 204, 206, and 208 are similarly radially separated from each other by 120 degrees.

The above-described structure not only provides optical fiber cable 200 with fire retardance but also resists crushing the relatively fragile optical fibers 212. Each of fiber subunits 204, 206, and 208 fits snugly within its respective channel 214, 216, and 218. That is, each of channels 214, 216, and 218 is substantially filled by optical fibers 212, with essentially no space for additional optical fibers 212. Accordingly, optical fiber cable 200 may have a 6.0 mm outer diameter with a packing density per channel in a range from about 1.0 to 8.0 fibers/mm². The snug fit of fiber subunits 204, 206, and 208 within their respective channels 214, 216, and 218, in conjunction with the mechanical strength of separator 210 and radial symmetry of channels 214, 216, and 218, promotes crush resistance. Absent a separator, a cable having exactly three fiber subunits would have an unstable geometric arrangement within the jacket under compression test conditions. That is, if such a cable were subjected to a compression test, the original substantially symmetrical cross-sectional shapes of the three subunits would deform to various asymmetrical, flattened shapes, thereby increasing the likelihood of damaging the fibers. Separator 210 thus promotes a stable geometric arrangement of fibers in a cable in which the number (three in this example) of subunits would otherwise make the subunits geometrically unstable within the jacket in a compression test.

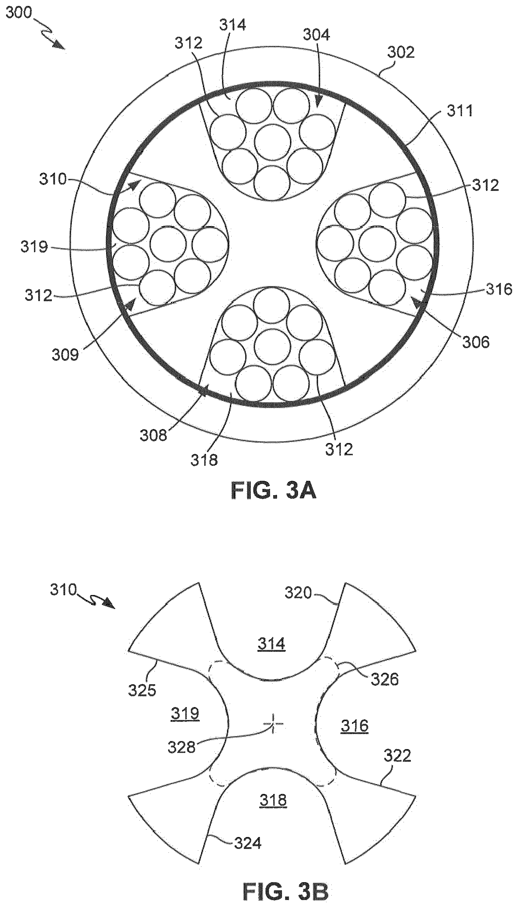

As illustrated in FIG. 3A (not to scale), in another illustrative or exemplary embodiment of the invention, an optical fiber cable 300 includes a cable jacket 302, four fiber subunits 304, 306, 308, and 309, a separator 310, and one or more strength members 311. Separator 310 is made of a fire retardant material. As described below, separator 310 provides cable 300 with not only fire retardance but also crush resistance and compactness required for indoor or indoor/outdoor applications. Unlike prior slotted cores, no rigid reinforcement, such as a solid steel wire, braided steel wires, fiberglass-epoxy composite rod, or other high tensile modulus strength member, is embedded in separator 310. As described in further detail below, separator 110 may consist entirely of a fire-retardant material having a tensile modulus in the range of 400-2400 Mpa. Rather, strength members 311 provide cable 300 with tensile strength without sacrificing compactness and flexibility.

Each of fiber subunits 304, 306, 308, and 309 includes multiple optical fibers 312. Optical fibers 312 may have a standard size, such as an overall diameter of 250 µm. For symmetry, each of fiber subunits 304, 306, 308, and 309 may have the same number of optical fibers 312. For example, each of the four fiber subunits 304, 306, 308, and 309 may consist of eight optical fibers 312, thereby providing optical fiber cable 300 with a total of 32 optical fibers.

Separator 310 has four channels 314, 316, 318, and 319 and may extend the length of optical fiber cable 300. Separator 310 has four arms 320, 322, 324, and 325 (FIG. 3B). Channel 314 is defined by the space between arms 320 and 325. Channel 316 is defined by the space between arms 320 and 322. Channel 318 is defined by the space between arms 322 and 324. Channel 319 is defined by the space between arms 324 and 325. Fiber subunits 304, 306, 308, and 309 extend the length of optical fiber cable 300 within channels 314, 316, 318 and 319, respectively.

As further shown in FIG. 3B, arms 320, 322, 324, and 325 extend in a radially symmetrical arrangement from a central portion 326 (indicated generally in broken line) of separator 310 toward the interior surface of cable jacket 302. The central axis 328 (indicated in FIG. 3B by crosshairs) of central portion 326, from which arms 320, 322, 324 and 325 radiate, is aligned with the longitudinal axis (not separately labeled in FIG. 3A) of cable jacket 302.

The one or more strength members 311 may comprise, for example, one or more para-aramid yarns helically wound around separator 310 and fiber subunits 304-309. That is, the one or more strength members 311 are under cable jacket 302 and over separator 310 and fiber subunits 304-309. The one or more strength members 311 are configured to provide tensile strength to optical fiber cable 300. The tensile modulus of strength members 311 may be 80,000 MPa or more, which is one or more orders of magnitude greater than the tensile modulus (400-2400 MPa) of separator 310. The one or more strength members 311 (e.g., para-aramid yarns) may collectively provide a tensile rating of at least 1320 N for optical fiber cable 300. Accordingly, strength members 311 provide essentially all of the tensile strength required for optical fiber cable 300 to meet installation load standards. The one or more strength members 311 are also configured to bind fiber subunits 304-309 with separator 310.

The ends of arms 320, 322, 324 and 325, wrapped by strength members 311, may be substantially in contact with the interior surface of cable jacket 302. The ends of arms 320, 322, 324, and 325 may have curved surfaces that match the curvature of the interior surface of cable jacket 302 to provide a stable fit.

Each of arms 320, 322, 324, and 325 has a distal portion with a generally sector-shaped cross section that adjoins or extends from central portion 326. That is, in this embodiment (FIGs. 3A-3B) the distal portion of each of arms 320, 222, 324, and 325 is widest at the end that contacts the interior surface of cable jacket 302. A wall or interior surface of channel 314 is defined by flat or slightly concave surfaces or walls of arms 320 and 325 and a first concave surface of central portion 326 between arms 320 and 325. A wall or interior surface of channel 316 is defined by flat or slightly concave surfaces or walls of arms 320 and 322 and a second concave surface of central portion 326 between arms 320 and 322. A wall or interior surface of channel 318 is defined by flat or slightly concave surfaces of arms 322 and 324 and a third concave surface of central portion 326 between arms 322 and 324. A wall or interior surface of channel 319 is defined by flat or slightly concave surfaces of arms 324 and 325 and a fourth concave surface of central portion 226 between arms 324 and 325. Each of channels 314, 316, 318, and 319 is bounded (in cross section) by such a wall and a portion of strength members 311, providing each of channels 314, 316, 318, and 319 with a generally sector-shaped cross section. Accordingly: arm 320 separates fiber subunit 304 from fiber subunit 306; arm 322 separates fiber subunit 306 from fiber subunit 308; arm 324 separates fiber subunit 308 from fiber subunit 309; and arm 325 separates fiber subunit 309 from fiber subunit 304. Also, as the central axes of arms 320, 322, 324, and 325 are radially separated from each other by 90 degrees with respect to central axis 328, the centroids of fiber subunits 304, 306, 308, and 309 are similarly radially separated from each other by 90 degrees.

The above-described structure not only provides optical fiber cable 300 with fire retardance but also resists crushing the relatively fragile optical fibers 312. Each of fiber subunits 304, 306, 308, and 309 fits snugly within its respective channel 314, 316, 318, and 319. That is, each of channels 314, 316, 318, and 319 is substantially filled by optical fibers 312, with essentially no space for additional optical fibers 312. Accordingly, optical fiber cable 300 may have a 6.3 mm outer diameter with packing density per channel in a range from about 1.0 to 8.0 fibers/mm². The snug fit of fiber subunits 304, 306, 308, and 309 within their respective channels 314, 316, 318, and 319, in conjunction with the mechanical strength of separator 310 and radial symmetry of channels 314, 316, 318, and 319, promotes crush resistance. Absent a separator, a cable having exactly four fiber subunits would have an unstable geometric arrangement within the jacket under compression test conditions. That is, if such a cable were subjected to a compression test, the original substantially symmetrical cross-sectional shapes of the four subunits would deform to various asymmetrical, flattened shapes, thereby increasing the likelihood of damaging the fibers. Separator 310 thus promotes a stable geometric arrangement of fibers in a cable in which the number (four in this example) of subunits would otherwise make the subunits geometrically unstable within the jacket in a compression test.

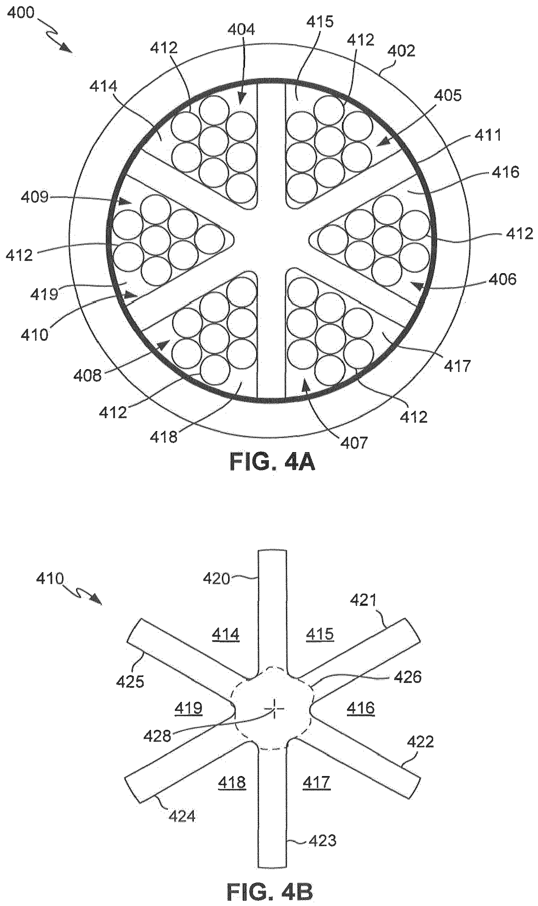

As illustrated in FIG. 4A (not to scale), in another illustrative or exemplary embodiment of the invention, an optical fiber cable 400 includes a cable jacket 402, six fiber subunits 404, 405, 406, 407, 408, and 409, a separator 410, and one or more strength members 411. Separator 410 is made of a fire retardant material. As described below, separator 410 provides cable 400 with not only fire retardance but also crush resistance and compactness required for indoor or indoor/outdoor applications. Unlike prior slotted cores, no rigid reinforcement or other strength member, such as a solid steel wire, braided steel wires, fiberglass-epoxy composite rod, or other high tensile modulus strength member, is embedded in separator 410. As described in further detail below, separator 110 may consist entirely of a fire-retardant material having a tensile modulus in the range of 400-2400 Mpa. Rather, strength members 411 provide cable 400 with tensile strength without sacrificing compactness and flexibility.

Each of fiber subunits 404-409 includes multiple optical fibers 412. Optical fibers 412 may have a standard size, such as an overall diameter of 250 µm. For symmetry, fiber subunits 404-409 may have the same number of optical fibers 412. For example, each of the six fiber subunits 404-409 may consist of eight optical fibers 412, thereby providing optical fiber cable 400 with a total of 48 optical fibers.

Separator 410 has six channels 414, 415, 416, 417, 418, and 419 and may extend the length of optical fiber cable 400. Separator 410 has six arms 420, 421, 422, 423, 424, and 425 (FIG. 4B). Channel 414 is defined by the space between arms 420 and 425. Channel 415 is defined by the space between arms 420 and 421. Channel 416 is defined by the space between arms 421 and 422. Channel 417 is defined by the space between arms 422 and 423. Channel 418 is defined by the space between arms 423 and 424. Channel 419 is defined by the space between arms 424 and 425. Fiber subunits 404-409 extend the length of optical fiber cable 400 within channels 414-419, respectively.

As further shown in FIG. 4B, arms 420-425 extend in a radially symmetrical arrangement from a central portion 426 (indicated generally in broken line) of separator 410 toward the interior surface of cable jacket 402. The central axis 428 (indicated in FIG. 4B by crosshairs) of central portion 426, from which arms 420-425 radiate, is aligned with the longitudinal axis (not separately labeled in FIG. 4A) of cable jacket 402.

The one or more strength members 411 may comprise, for example, one or more para-aramid yarns helically wound around separator 410 and fiber subunits 404-409. That is, the one or more strength members 411 are under cable jacket 402 and over separator 410 and fiber subunits 404-409. The one or more strength members 411 are configured to provide tensile strength to optical fiber cable 400. The tensile modulus of strength members 411 may be 80,000 MPa or more, which is one or more orders of magnitude greater than the tensile modulus (400-2400 MPa) of separator 410. The one or more strength members 411 (e.g., para-aramid yarns) may collectively provide a tensile rating of at least 1320 N for optical fiber cable 400. Accordingly, strength members 411 provide essentially all of the tensile strength required for optical fiber cable 400 to meet installation load standards. The one or more strength members 411 are also configured to bind fiber subunits 404-409 with separator 410.

The ends of arms 420-425, wrapped by strength members 411, may be substantially in contact with the interior surface of cable jacket 402. The ends of arms 420-425 may have curved surfaces that match the curvature of the interior surface of cable jacket 402 to provide a stable fit.

Each of arms 420-425 has a distal portion with a generally rectangular cross sectional shape that adjoins or extends from central portion 326. A wall or interior surface of channel 414 is defined by flat surfaces or walls of arms 420 and 425 and a first concave surface of central portion 426 between arms 420 and 425. A wall or interior surface of channel 415 is defined by flat surfaces or walls of arms 420 and 421 and a second concave surface of central portion 426 between arms 420 and 421. A wall or interior surface of channel 416 is defined by flat surfaces or walls of arms 421 and 422 and a third concave surface of central portion 426 between arms 421 and 422. A wall or interior surface of channel 417 is defined by flat surfaces or walls of arms 422 and 423 and a fourth concave surface of central portion 426 between arms 422 and 423. A wall or interior surface of channel 418 is defined by flat surfaces or walls of arms 423 and 424 and a fifth concave surface of central portion 426 between arms 423 and 424. A wall or interior surface of channel 419 is defined by flat surfaces or walls of arms 424 and 425 and a sixth concave surface of central portion 426 between arms 424 and 425. Each of channels 414-419 is bounded (in cross section) by such a wall and a portion of strength members 411, providing each of channels 414-419 with a generally sector-shaped cross section. Accordingly: arm 420 separates fiber subunit 404 from fiber subunit 405; arm 421 separates fiber subunit 405 from fiber subunit 406; arm 422 separates fiber subunit 406 from fiber subunit 407; arm 423 separates fiber subunit 407 from fiber subunit 408; arm 424 separates fiber subunit 408 from fiber subunit 409; and arm 425 separates fiber subunit 409 from fiber subunit 404. Also, as the central axes of arms 420-425 are radially separated from each other by 60 degrees with respect to central axis 428, the centroids of fiber subunits 404-409 are similarly radially separated from each other by 60 degrees.

The above-described structure not only provides optical fiber cable 400 with fire retardance but also resists crushing the relatively fragile optical fibers 412. Each of fiber subunits 404-409 fits snugly within its respective channel 414-419. That is, each of channels 414-419 is substantially filled by optical fibers 412, with essentially no space for additional optical fibers 412. Accordingly, optical fiber cable 400 may have a 6.3 mm outer diameter with packing density per channel in a range from about 1.0 to 8.0 fibers/mm². The snug fit of fiber subunits 404-409 within their respective channels 414-419, in conjunction with the mechanical strength of separator 410 and radial symmetry of channels 414-419, promotes crush resistance. Absent a separator, a cable having exactly six fiber subunits would have an unstable geometric arrangement within the jacket under compression test conditions. That is, if such a cable were subjected to a compression test, the original substantially symmetrical cross-sectional shapes of the six subunits would deform to various asymmetrical, flattened shapes, thereby increasing the likelihood of damaging the fibers. Separator 410 thus promotes a stable geometric arrangement of fibers in a cable in which the number (six in this example) of subunits would otherwise make the subunits geometrically unstable within the jacket in a compression test.

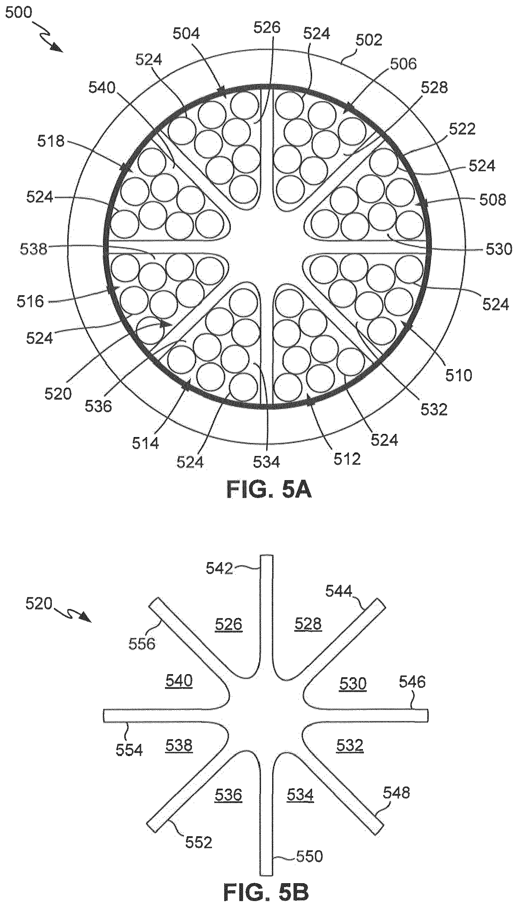

As illustrated in FIG. 5A (not to scale), in another illustrative or exemplary embodiment of the invention, an optical fiber cable 500 includes a cable jacket 502, eight fiber subunits 504, 506, 508, 510, 512, 514, 516, and 518, a separator 520, and one or more strength members 522. Separator 520 is made of a fire retardant material. As described below, separator 520 provides cable 500 with not only fire retardance but also crush resistance and compactness required for indoor or indoor/outdoor applications. Unlike prior slotted cores, no rigid reinforcement, such as a solid steel wire, braided steel wires, fiberglass-epoxy composite rod, or other high tensile modulus strength member, is embedded in separator 520. As described in further detail below, separator 110 may consist entirely of a fire-retardant material having a tensile modulus in the range of 400-2400 Mpa. Rather, strength members 522 provide cable 500 with tensile strength without sacrificing compactness and flexibility.

Each of fiber subunits 504-518 includes multiple optical fibers 524. Optical fibers 524 may have a standard size, such as an overall diameter of 250 µm. For symmetry, fiber subunits 504-518 may have the same number of optical fibers 524. For example, each of the eight fiber subunits 504-518 may consist of eight optical fibers 524, thereby providing optical fiber cable 500 with a total of 64 optical fibers.

Separator 520 has eight channels 526, 528, 530, 532, 534, 536, 538, and 540 and may extend the length of optical fiber cable 500. Separator 520 has eight arms 542, 544, 546, 548, 550, 552, 554, and 556 (FIG. 5B). Channel 526 is defined by the space between arms 556 and 542. Channel 528 is defined by the space between arms 542 and 544. Channel 530 is defined by the space between arms 544 and 546. Channel 532 is defined by the space between arms 546 and 548. Channel 534 is defined by the space between arms 548 and 550. Channel 536 is defined by the space between arms 550 and 552. Channel 538 is defined by the space between arms 552 and 554. Channel 540 is defined by the space between arms 554 and 556. Fiber subunits 504-518 extend the length of optical fiber cable 500 within channels 526-540, respectively.

The ends of arms 542-556, wrapped by strength members 522, may be substantially in contact with the interior surface of cable jacket 502. The ends of arms 542-556 may have curved surfaces that match the curvature of the interior surface of cable jacket 502 to provide a stable fit.

The shapes and geometric arrangement of arms 542-556 are similar to those aspects described above with regard to the embodiment illustrated in FIGs. 4A-4B. Accordingly, such aspects are not described in similar detail with regard to the embodiment illustrated in FIGs. 5A-5B.

The one or more strength members 522 may comprise, for example, one or more para-aramid yarns helically wound around separator 520 and fiber subunits 504-518. That is, the one or more strength members 522 are under cable jacket 502 and over separator 520 and fiber subunits 504-518. The one or more strength members 522 are configured to provide tensile strength to optical fiber cable 500. The tensile modulus of strength members 522 may be 80,000 MPa or more, which is one or more orders of magnitude greater than the tensile modulus (400-2400 MPa) of separator 520. The one or more strength members 522 (e.g., para-aramid yarns) may collectively provide a tensile rating of at least 1320 N for optical fiber cable 500. Accordingly, strength members 522 provide essentially all of the tensile strength required for optical fiber cable 500 to meet installation load standards. The one or more strength members 522 are also configured to bind fiber subunits 504-518 with separator 520.

The above-described structure not only provides optical fiber cable 500 with fire retardance but also resists crushing the relatively fragile optical fibers 524. Each of fiber subunits 504-518 fits snugly within its respective channel 526-540. That is, each of channels 526-540 is substantially filled by optical fibers 524, with essentially no space for additional optical fibers 524. Accordingly, optical fiber cable 500 may have a 6.3 mm outer diameter with packing density per channel in a range from about 1.0 to 8.0 fibers/mm². The snug fit of fiber subunits 504-518 within their respective channels 526-540, in conjunction with the mechanical strength of separator 520 and radial symmetry of channels 526-540, promotes crush resistance. Absent a separator, a cable having exactly eight fiber subunits would have an unstable geometric arrangement within the jacket under compression test conditions. That is, if such a cable were subjected to a compression test, the original substantially symmetrical cross-sectional shapes of the eight subunits would deform to various asymmetrical, flattened shapes, thereby increasing the likelihood of damaging the fibers. Separator 520 thus promotes a stable geometric arrangement of fibers in a cable in which the number (eight in this example) of subunits would otherwise make the subunits geometrically unstable within the jacket in a compression test.

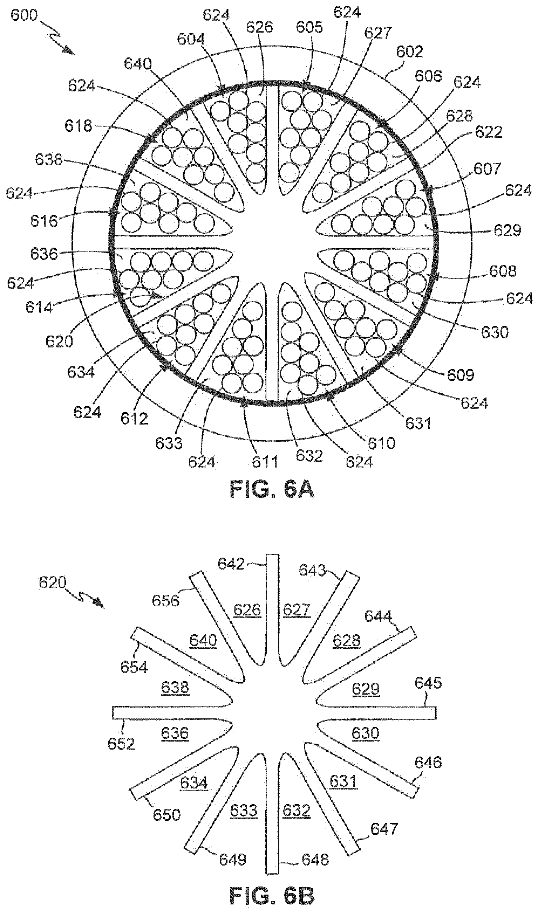

As illustrated in FIG. 6A (not to scale), in another illustrative or exemplary embodiment of the invention, an optical fiber cable 600 includes a cable jacket 602, twelve fiber subunits 604, 605, 606, 607, 608, 609, 610, 611, 612, 614, 616, and 618, a separator 620, and one or more strength members 622. Separator 620 is made of a fire retardant material. As described below, separator 620 provides cable 600 with not only fire retardance but also crush resistance and compactness required for indoor or indoor/outdoor applications. Unlike prior slotted cores, no rigid reinforcement, such as a solid steel wire, braided steel wires, fiberglass-epoxy composite rod, or other high tensile modulus strength member, is embedded in separator 620. As described in further detail below, separator 110 may consist entirely of a fire-retardant material having a tensile modulus in the range of 400-2400 Mpa. Rather, strength members 622 provide cable 600 with tensile strength without sacrificing compactness and flexibility.

Each of fiber subunits 604-618 includes multiple optical fibers 624. Optical fibers 624 may have a standard size, such as an overall diameter of 250 µm. For symmetry, fiber subunits 604-618 may have the same number of optical fibers 624. For example, each of the twelve fiber subunits 604-618 may consist of eight optical fibers 624, thereby providing optical fiber cable 600 with a total of 96 optical fibers.

Separator 620 has twelve channels 626, 627, 628, 629, 630, 631, 632, 633, 634, 636, 638, and 640 and may extend the length of optical fiber cable 600. Separator 620 has twelve arms 642, 643, 644, 645, 646, 647, 648, 649, 650, 652, 654, and 656 (FIG. 5B). Channel 626 is defined by the space between arms 656 and 642. Channel 627 is defined by the space between arms 642 and 643. Channel 628 is defined by the space between arms 643 and 644. Channel 629 is defined by the space between arms 644 and 645. Channel 630 is defined by the space between arms 645 and 646. Channel 631 is defined by the space between arms 646 and 647. Channel 632 is defined by the space between arms 647 and 648. Channel 633 is defined by the space between arms 648 and 649. Channel 634 is defined by the space between arms 649 and 650. Channel 636 is defined by the space between arms 650 and 652. Channel 638 is defined by the space between arms 652 and 654. Channel 640 is defined by the space between arms 654 and 656. Fiber subunits 604-618 extend the length of optical fiber cable 600 within channels 626-640, respectively.

The ends of arms 642-656, wrapped by strength members 622, may be substantially in contact with the interior surface of cable jacket 602. The ends of arms 642-656 may have curved surfaces that match the curvature of the interior surface of cable jacket 602 to provide a stable fit.

The shapes and geometric arrangement of arms 642-656 are similar to those aspects described above with regard to the embodiments illustrated in FIGs. 4A-4B and 5A-5B. Accordingly, such aspects are not described in similar detail with regard to the embodiment illustrated in FIGs. 6A-6B.

The one or more strength members 622 may comprise, for example, one or more para-aramid yarns helically wound around separator 620 and fiber subunits 604-618. That is, the one or more strength members 622 are under cable jacket 602 and over separator 620 and fiber subunits 604-618. The one or more strength members 622 are configured to provide tensile strength to optical fiber cable 600. The tensile modulus of strength members 622 may be 80,000 MPa or more, which is one or more orders of magnitude greater than the tensile modulus (400-2400 MPa) of separator 620. The one or more strength members 622 (e.g., para-aramid yarns) may collectively provide a tensile rating of at least 1320 N for optical fiber cable 600. Accordingly, strength members 622 provide essentially all of the tensile strength required for optical fiber cable 600 to meet installation load standards. The one or more strength members 622 are also configured to bind fiber subunits 604-618 with separator 620.

The above-described structure not only provides optical fiber cable 600 with fire retardance but also resists crushing the relatively fragile optical fibers 624. Each of fiber subunits 604-618 fits snugly within its respective channel 626-640. That is, each of channels 626-640 is substantially filled by optical fibers 624, with essentially no space for additional optical fibers 624. Accordingly, optical fiber cable 600 may have a 6.3 mm outer diameter with packing density per channel in a range from about 1.0 to 8.0 fibers/mm². The snug fit of fiber subunits 604-618 within their respective channels 626-640, in conjunction with the mechanical strength of separator 620 and radial symmetry of channels 626-640, promotes crush resistance. Absent a separator, a cable having exactly twelve fiber subunits would have an unstable geometric arrangement within the jacket under compression test conditions. That is, if such a cable were subjected to a compression test, the original substantially symmetrical cross-sectional shapes of the twelve subunits would deform to various asymmetrical, flattened shapes, thereby increasing the likelihood of damaging the fibers. Separator 620 thus promotes a stable geometric arrangement of fibers in a cable in which the number (twelve in this example) of subunits would otherwise make the subunits geometrically unstable within the jacket in a compression test.

As illustrated in FIG. 7 (not to scale), in another illustrative or exemplary embodiment of the invention, an optical fiber cable 700 includes a cable jacket 702, three fiber subunits 704, 706, and 708, and a separator 710. Separator 710 is made of a fire retardant material. As described below, separator 710 provides cable 700 with not only fire retardance but also crush resistance and compactness required for indoor or indoor/outdoor applications. Unlike prior slotted cores, no rigid reinforcement, such as a solid steel wire, braided steel wires, fiberglass-epoxy composite rod, or other high tensile modulus strength member, is embedded in separator 710. As described in further detail below, separator 710 may consist entirely of a fire-retardant material having a tensile modulus in the range of 400-2400 Mpa.

Fiber subunit 704 includes three sub-jackets 712A, 712B, and 712C (collectively referred to as sub-jackets 712). Fiber subunit 706 includes three sub-jackets 714A, 714B, and 714C (collectively referred to as sub-jackets 714). Fiber subunit 708 includes three sub-jackets 716A, 716B, and 716C (collectively referred to as sub-jackets 716). Each of sub-jackets 712, 714, and 716 contains multiple optical fibers 718. Optical fibers 718 may have a standard size, such as an overall diameter of 250 µm. For symmetry, sub-jackets 712, 714, and 716 may contain the same number of optical fibers 718. For example, each of sub-jackets 712, 714, and 716 may contain eight optical fibers 718, thereby providing each of fiber subunits 704, 706, and 708 with 24 optical fibers 718 and providing optical fiber cable 600 with a total of 72 optical fibers 718.

Each of sub-jackets 712, 714, and 716 further contains one or more strength members 720 (shaded in FIG. 7 for clarity). The one or more strength members 720 may comprise, for example, one or more para-aramid yarns. The one or more strength members 720 are configured to provide tensile strength to optical fiber cable 700. The tensile modulus of strength members 720 may be 80,000 MPa or more, which is one or more orders of magnitude greater than the tensile modulus (400-2400 MPa) of separator 710. The one or more strength members 720 (e.g., para-aramid yarns) may collectively provide a tensile rating of at least 1320 N for optical fiber cable 700. Accordingly, strength members 720 provide essentially all of the tensile strength required for optical fiber cable 700 to meet installation load standards.

Although not shown for purposes of clarity, one or more binders (e.g., yarns) may be helically wound around separator 710 and fiber subunits 704-708, Such binders need not provide tensile strength.

Separator 710 may be similar to separator 210, described above with regard to the embodiment illustrated in FIGs. 2A-2B. For example, separator 710 may have three channels 728, 730, and 732, in which fiber subunits 704, 706, and 708 respectively extend. Nevertheless, in other embodiments (not shown) that include sub-jacketed subunits, such a separator may have any number of channels, with each channel containing any number of sub-jackets, and with each sub-jacket containing any number of fibers, provided that the combined effect of the number of channels, sub-jackets, and fibers provides the stability and crush resistance described herein.

The above-described structure not only provides optical fiber cable 700 with fire retardance but also resists crushing the relatively fragile optical fibers 718. Each of fiber subunits 704-708 fits snugly within its respective channel 728-732. That is, each of channels 728-732 is substantially filled by the respective one of fiber subunits 704-708, and each of fiber subunits 704-708 is substantially filed by optical fibers 718, with essentially no space for additional optical fibers 718. Accordingly, optical fiber cable 700 may have a 6.3 mm outer diameter with packing density per channel in a range from about 1.0 to 8.0 fibers/mm². The snug fit of fiber subunits 704-708 within their respective channels 728-732, in conjunction with the mechanical strength of separator 710 and radial symmetry of channels 728-732, promotes crush resistance. Absent a separator, a cable having exactly three fiber subunits, each having three sub-jackets, would have an unstable geometric arrangement within the outer jacket under compression test conditions.

Separators 110, 210, 310, 410, 520, 620, and 710 may be made of, for example, polyvinylidene polyvinylidene difluoride (PVDF), low smoke polyvinyl chloride (LSPVC), low smoke zero halogen (LSZH) thermoplastic, or other similar fire retardant material having sufficient mechanical strength to provide the above-described crush resistance and sufficient flexibility for backbone cable applications. Separators 110, 210, 310, 410, 520, 620, and 710 may be extruded, either before cable manufacturing or during cable manufacturing in manner similar to that in which jackets 102, 202, 302, 402, 502, 602, and 702 may be extruded. The foregoing materials or similar materials may be foamed or solid, characterized by a tensile module in a range from 400 to 2400 MPa, a flexural modulus in a range from 100 to 900 MPa, providing crush resistance of 100 N/cm, and a minimum bend radius of no more than 20 times the outer diameter of the cable. These fire retardant materials may have a specific gravity ranging from 1.2 to 1.9 and a limiting oxygen index (LOI) of 30% or higher.

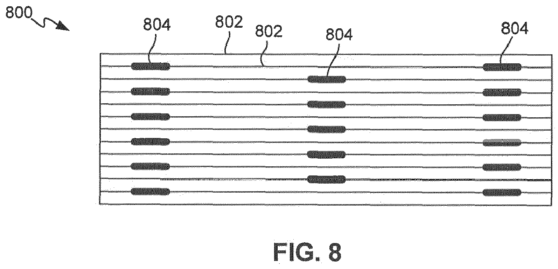

A rollable optical fiber ribbon 800 is shown in FIG. 8. Rollable optical fiber ribbon 800 may be an example of any of fiber subunits 104-108 (FIG. 1A), 204-208 (FIG. 2A), 304-309 (FIG. 3A), 404-409 (FIG. 4A), 504-518 (FIG. 5A), and 604-618 (FIG. 6A), or sub-jacketed fibers 718 (FIG. 7). That is, as an alternative to a subunit consisting of loose fibers in the above-described embodiments, a subunit may consist of a so-called "rollable" ribbon in which adjacent fibers are intermittently joined along their lengths. Rollable optical fiber ribbon 800 comprises a plurality of optical fibers 802 joined to each other intermittently along their lengths with patches of adhesive, commonly referred to as a matrix material 804. The pattern of matrix material 804 shown in FIG. 8 or other characteristics of rollable optical fiber ribbon 800 described herein are intended only as examples, and one of ordinary skill in the art will recognize that other types of rollable optical fiber ribbon are suitable.

As well understood by one of ordinary skill in the art, although rollable optical fiber ribbon 800 has the ribbon shape shown in FIG. 8 when laid flat with its optical fibers 802 arrayed parallel to each other, optical fibers 802 can also roll into or otherwise assume a compact bundle or roughly cylindrical shape. That is, the intermittent rather than continuous distribution of matrix material 804 provides rollable optical fiber ribbon 800 with sufficient flexibility to be rolled about an axis substantially parallel to the fibers. The term "rollable" is understood by one of ordinary skill in the art in the context of optical fiber ribbons to specifically refer to a ribbon having this characteristic, provided by the intermittent rather than continuous distribution of matrix material 804. A "rollable" ribbon may be contrasted with what is commonly referred to in the art as a "flat" ribbon, in which matrix material is distributed continuously along the length of the fibers. In a flat ribbon, the fibers may be fully encapsulated within the matrix material. The rigidity of encapsulated optical fiber ribbons presents challenges to achieving high fiber packing density in cables. The development of rollable ribbons has led to higher fiber packing density in cables.

Rollable optical fiber ribbon 800 may, for example, have a width (when laid flat with its optical fibers 802 arrayed parallel to each other) of 200 micrometers and consist of eight 250 (or alternatively, 200) micrometer diameter fibers 802. In other embodiments, such a rollable optical fiber ribbon 800 may comprise more than eight such fibers.

In the optical cables disclosed herein, the separator, by virtue of the non-tetragonal or otherwise symmetric arrangement of channels that are substantially filled by optical fibers, provides crush resistance, while being made of flame retardant materials helps meet requirements for compact indoor or indoor/outdoor cables. That the cables have no rigid reinforcement embedded in the separator facilitates compactness, flexibility, and thus suitability for use in congested indoor spaces. Placing a rigid reinforcement in the center would make the cables stiffer and harder to bend, requiring a larger cable bend radius and making the cables harder to handle in a congested indoor environment. Instead, sufficient tensile stiffness to satisfy the requirements for an indoor cable is supplied through deployment of reinforcing yarn.

According to an aspect 1, an optical fiber cable comprises:
a cable jacket;
a separator within the cable jacket, the separator made of a fire retardant material and having a plurality of channels, the separator devoid of an embedded strength member;
a plurality of fiber subunits within the cable jacket, each fiber subunit comprising a plurality of optical fibers and extending within a respective one of the channels, each fiber subunit separated from an adjacent fiber subunit by a channel wall; and
one or more strength members under the cable jacket and over the separator and fiber subunits, the one or more strength members configured to provide tensile strength to the optical fiber cable and bind the fiber subunits with the separator.

According to an aspect 2, in the optical fiber cable of aspect 1, the one or more strength members comprise one or more helically wound para-aramid yarns characterized by a tensile modulus greater than 80,000 megapascal (MPa) and providing a tensile rating of at least 1320 Newton for the optical fiber cable; and the separator has tensile modulus in a range from 400 to 2400 (Mpa).

According to an aspect 3, in the optical fiber cable of aspect 1, the separator comprises a central portion having an axis substantially coincident with a central axis of the cable jacket; and a plurality of arms extending from the central portion toward the interior surface of the jacket, the plurality of arms disposed in a radially symmetrical arrangement with respect to a central axis of the cable jacket, each channel defined by a space between two adjacent arms.

According to an aspect 4, in the optical fiber cable of aspect 3, a packing density of the plurality of optical fibers within each channel is in a range from about 1.0 to 8.0 fibers per square millimeter (mm²).

According to an aspect 5, in the optical fiber cable of aspect 4, the separator has at least three channels; and each fiber subunit has at least eight fibers.

According to an aspect 6, in the optical fiber cable of aspect 5, the separator has exactly 3 channels; and the fiber subunit extending within each channel has exactly 8 fibers.

According to an aspect 7, in the optical fiber cable of aspect 5, the separator has exactly 4 channels; and the fiber subunit extending within each channel has exactly 8 fibers.

According to an aspect 8, in the optical fiber cable of aspect 5, the separator has exactly 6 channels; and the fiber subunit extending within each channel has exactly 8 fibers.

According to an aspect 9, in the optical fiber cable of aspect 5, the separator has exactly 8 channels; and the fiber subunit extending within each channel has exactly 8 fibers.

According to an aspect 10, in the optical fiber cable of aspect 5, the separator has exactly 12 channels; and the fiber subunit extending within each of the channels has exactly 8 fibers.

According to an aspect 11, in the optical fiber cable of aspect 1, the fire retardant material comprises at least one of: polyvinylidene difluoride (PVDF), low smoke polyvinyl chloride (LSPVC), and low smoke zero halogen (LSZH) thermoplastic.

According to an aspect 12, in the optical fiber cable of aspect 11, the fire retardant material has a structure selected from the group consisting of foamed and solid; the fire retardant material has a flexural modulus in a range from 100 to 900 megapascal (MPa); the fire retardant material has a tensile modulus in a range from 400 to 2400 Mpa; the fire retardant material has crush resistance of 100 Newton per centimeter (N/cm); and the fire retardant material has a minimum bend radius of no more than 20 times an outer diameter of the optical fiber cable.

According to an aspect 13, in the optical fiber cable of aspect 12, the fire retardant material has a specific gravity in a range from 1.2 to 1.9; and the fire retardant material has a limiting oxygen index (LOI) of at least 30%.

According to an aspect 14, in the optical fiber cable of aspect 1, each fiber subunit is selected from the group consisting of: loose fibers with diameter of 250 micrometer, and 200 micrometer-rollable ribbon comprising at least eight 250 micrometer diameter fibers or at least eight 200 micrometer diameter fibers.

According to an aspect 15, an optical fiber cable comprises:
a cable jacket;
a separator within the cable jacket, the separator made of a fire retardant material and having a plurality of channels, the separator devoid of an embedded strength member; and
a plurality of fiber subunits within the cable jacket, each fiber subunit comprising a sub-jacket and a plurality of optical fibers and one or more strength members within the sub-jacket, each fiber subunit extending within a respective one of the channels and separated from an adjacent fiber subunit by a channel wall, the one or more strength members configured to provide tensile strength to the optical fiber cable.

According to an aspect 16, in the optical fiber cable of aspect 15, each fiber subunit comprises a plurality of sub-jackets, each containing a plurality of optical fibers and one or more strength members.

According to an aspect 17, in the optical fiber cable of aspect 15, the one or more strength members comprise one or more para-aramid yarns characterized by a tensile modulus greater than 80,000 megapascal (MPa) and providing a tensile rating of at least 1320 Newton for the optical fiber cable; and the separator has tensile modulus in a range from 400 to 2400 Mpa.

According to an aspect 18, in the optical fiber cable of aspect 15, the fire retardant material comprises at least one of: polyvinylidene difluoride (PVDF), low smoke polyvinyl chloride (LSPVC), and low smoke zero halogen (LSZH) thermoplastic.

According to an aspect 19, in the optical fiber cable of aspect 18, the fire retardant material has a structure selected from the group consisting of foamed and solid; and the fire retardant material has a flexural modulus in a range from 100 to 900 megapascal (MPa); the fire retardant material has a tensile modulus in a range from 400 to 2400 Mpa; the fire retardant material has crush resistance of 100 Newton per centimeter (N/cm); and the fire retardant material has a minimum bend radius of no more than 20 times an outer diameter of the optical fiber cable.

According to an aspect 20, in the optical fiber cable of aspect 19, the fire retardant material has a specific gravity in a range from 1.2 to 1.9; and the fire retardant material has a limiting oxygen index (LOI) of at least 30%.

According to an aspect 21, in the optical fiber cable of aspect 15, each fiber subunit is selected from the group consisting of: loose fibers with diameter of 250 micrometer, and 200 micrometer-rollable ribbon comprising at least eight 250 micrometer diameter fibers or at least eight 200 micrometer diameter fibers.

One or more illustrative or exemplary embodiments of the invention have been described above. However, it is to be understood that the invention is defined by the appended claims and is not limited to the specific embodiments described.

## Claims

1. An optical fiber cable, comprising:
a cable jacket;
a separator within the cable jacket, the separator made of a fire retardant material and having a plurality of channels, the separator devoid of an embedded strength member;
a plurality of fiber subunits within the cable jacket, each fiber subunit comprising a plurality of optical fibers and extending within a respective one of the channels, each fiber subunit separated from an adjacent fiber subunit by a channel wall; and
one or more strength members under the cable jacket and over the separator and fiber subunits, the one or more strength members configured to provide tensile strength to the optical fiber cable and bind the fiber subunits with the separator.

2. The optical fiber cable of claim 1, wherein:
the one or more strength members comprise one or more helically wound para-aramid yarns **characterized by** a tensile modulus greater than 80,000 megapascal (MPa) and providing a tensile rating of at least 1320 Newton for the optical fiber cable; and
the separator has tensile modulus in a range from 400 to 2400 (Mpa).

3. The optical fiber cable of claim 1 or 2, wherein the separator comprises:
a central portion having an axis substantially coincident with a central axis of the cable jacket; and
a plurality of arms extending from the central portion toward the interior surface of the jacket, the plurality of arms disposed in a radially symmetrical arrangement with respect to a central axis of the cable jacket, each channel defined by a space between two adjacent arms.

4. The optical fiber cable of claim 3, wherein a packing density of the plurality of optical fibers within each channel is in a range from about 1.0 to 8.0 fibers per square millimeter (mm²).

5. The optical fiber cable of claim 4, wherein:
the separator has at least three channels; and
each fiber subunit has at least eight fibers.

6. The optical fiber cable of claim 1, wherein the fire retardant material comprises at least one of: polyvinylidene difluoride (PVDF), low smoke polyvinyl chloride (LSPVC), and low smoke zero halogen (LSZH) thermoplastic.

7. The optical fiber cable of claim 6, wherein:
the fire retardant material has a structure selected from the group consisting of foamed and solid;
the fire retardant material has a flexural modulus in a range from 100 to 900 megapascal (MPa);
the fire retardant material has a tensile modulus in a range from 400 to 2400 Mpa;
the fire retardant material has crush resistance of 100 Newton per centimeter (N/cm); and
the fire retardant material has a minimum bend radius of no more than 20 times an outer diameter of the optical fiber cable.

8. The optical fiber cable of claim 7, wherein:
the fire retardant material has a specific gravity in a range from 1.2 to 1.9; and
the fire retardant material has a limiting oxygen index (LOI) of at least 30%.

9. The optical fiber cable of claim 1, wherein each fiber subunit is selected from the group consisting of: loose fibers with diameter of 250 micrometer, and 200 micrometer-rollable ribbon comprising at least eight 250 micrometer diameter fibers or at least eight 200 micrometer diameter fibers.
